# EUROPEAN PATENT SPECIFICATION

(11) **EP 1 379 580 B1**
(45) Date of publication and mention of the grant of the patent: **07.06.2006**
(21) Application number: 02705623.3
(22) Date of filing: 19.03.2002
(51) Int. Cl.: C08J 11/06

(54) **PROCESS FOR THE TREATMENT OF MIXED PLASTIC-CONTAINING WASTE**
VERFAHREN ZUR HERSTELLUNG VON GEMISCHTEN KUNSTSTOFFABFÄLLEN
PROCEDE DE TRAITEMENT DE DECHETS MELANGES CONTENANT DU PLASTIQUE

(30) Priority: 20.03.2001 EP 01201060
(43) Date of publication of application: 14.01.2004
(73) Proprietor: DSM IP Assets B.V., 6411 TE Heerlen (NL)
(72) Inventor: VAN DER LINDEN, Alfons, Matheas, Gertrudes, NL-6005 LC Weert (NL); CHRISTOFFEL, Anton, Rudolf, NL-6243 CA Geulle (NL); SCHÖEN, Löwhardt, Adolf, Albert, NL-6176 BT Spaubeek (NL)
(86) International application number: PCT/NL2002/000178
(87) International publication number: WO 2002/074845

(56) References cited:
- GB-A- 1 243 603
- US-A- 3 826 789
- US-A- 5 472 997

## Description

The present invention relates to a process for the treatment of mixed plastic-containing waste comprising at least 50 wt.% of plastic, wherein an aqueous slurry comprising the mixed plastic-containing waste and an aqueous phase is kept at a temperature above 180°C during a residence step with a residence time of between 5 minutes and 6 hours, the pressure being at least autogenous, and wherein the aqueous slurry comprising the mixed plastic-containing waste and the aqueous phase is subsequently cooled in a cooling procedure to at least a temperature at which the plastic fraction that was molten during the residence step, solidifies, and purified mixed plastic particles are formed.

Such a process is known from US-A-3,826,789. The process of US-A-3,826,789 is primarily related to the dechlorination of polyvinyl chloride (PVC) waste, although the process is also said to be useful for composite materials containing PVC.

The process of US-A-3,826,789 involves the heating of PVC or composite materials containing PVC in an aqueous solution of a basic inorganic material to between about 180°C and about 300°C, at an elevated pressure in order to avoid volatilisation of the system involved. The system is maintained at a temperature within the range mentioned for from about 5 minutes to about 6 hours. After completion of this step, the contents of the system are removed, cooled and subsequently the solid material is filtrated and dried.

A disadvantage of the process according to US-A-3,826,789 is that the resulting purified mixed plastic is typically in the form of large chunks of material; this makes the purified mixed plastic difficult to handle, e.g. for subsequent transport through pipes.

It is an objective of the present invention to largely overcome said disadvantage.

Said objective is achieved in that the temperature at which the aqueous slurry is kept during the residence step is chosen such that at least 80 wt.% of the plastic melts, and in that the formation of purified mixed plastic particles having at least one dimension larger than 20 mm is prevented through agitation during at least part of the pre-heating step, the residence step, and the cooling procedure.

The advantage of the process according to the invention is that the purified mixed plastic resulting from the process appears in the form of small particles, which makes the purified mixed plastic better suitable for direct - and, if so desired, automated - subsequent handling and transport operations, and better suitable for direct - and, if so desired, automated - use in applications, for example applications requiring a feeding step with a size limitation, e.g. feeding through a pipe to a burner or to an injection moulding machine.

Another advantage of the process according to the invention is that chemical reactions and/or the transfer of non-plastic components into the aqueous phase are greatly facilitated.

Any wt.% indications regarding any type of mixed plastic-containing waste or of purified mixed plastic particles as used in the context of the present invention is an indication valid for the overall average of said materials present in the space where the process according to the invention takes place; it is not a requirement for individual samples, particles or droplets which may vary significantly in composition.

Mixed plastic-containing waste denotes, within the context of the present invention, waste from, in principle, any source. The waste should comprise plastic, and therefore has a plastic fraction and a non-plastic fraction. Since the source of the waste is not a given, the waste is defined as mixed; nevertheless, individual lots of mixed plastic-containing waste to be treated in the process according to the invention may well originate from one source and may even contain only one type of waste and/or only one type of plastic.

Since the mixed plastic-containing waste as used in the process according to the invention may originate from a variety of sources, its composition can vary greatly. For example, the mixed plastic-containing waste may be generated by waste processing plants, for example plants that separate a plastic-containing fraction from municipal waste. It is also quite possible, however, that the mixed plastic-containing waste is generated through a targeted recycling program active in collecting industrial waste or specific post-consumer waste.

Although the sources of the mixed plastic-containing waste may vary greatly, it should comprise at least 50 wt.% plastic. Plastic is defined in the context of the present invention as a compound comprising at least one polymeric resin and optionally additives commonly used in plastics such as for example pigments, plasticizers, and UV stabilizers. Additionally, plastics within the context of the present invention are those plastics that can be melted at a temperature between 180°C and 350°C, or, if the mixed plastic-containing waste comprises a mixture of various types of plastics, those mixtures of plastics wherein at least 80 wt.% is in a molten state at a temperature between 180°C and 350°C. A plastic is in a molten state when it has a temperature above its melting point (Tₘ, determined via Differential Scanning Calorimetry (DSC) according to ISO 11357), or, in case melt temperature is not applicable due to the absence of a crystalline phase, its glass transition temperature (T_{g}, determined via Dynamic Mechanical Thermal Analysis (DMTA) according to ASTM D5279).

The remaining, non-plastic fraction in the mixed plastic-containing waste as used in the process according to the invention may comprise a wide variety of materials. Examples of said materials are: paper, cardboard, and other cellulose-containing materials; residues of adhesives; food residues; inorganic materials like minerals and glass; sand; metallic particles.

The mixture of the mixed plastic-containing waste and the aqueous phase is defined as an aqueous slurry, since it will typically be a multi-phase system that may comprise both a liquid phase or multiple liquid phases as well as solid components. The aqueous phase comprises primarily water. It may also comprise additional components, such as a base. The aqueous phase may further comprise, in particular during the residence step and the cooling, procedure, components that have transferred from the mixed plastic-containing waste.

The slurry is kept at a temperature between 180°C and 350°C during the residence step. The temperature and time at which the slurry is kept during the residence step should be chosen such that at least 80 wt% of the plastic melts. Said temperature may therefore vary, depending on the type of plastic or mixture of plastics in the mixed plastic-containing waste. The temperature adjustment may be done through any suitable known means such as for example by using a heat exchanger. Volatile components such as water should remain substantially in the liquid phase during the process according to the invention; the pressure should therefore be at least autogenous, being the combined vapour pressure that is generated by the components of the slurry at the prevailing temperature. During the residence step, when 80 % of the plastic is in a molten state, certain processes, for example transfer of water-soluble components into the aqueous phase or dechlorination of chlorine-containing components, can take place. Variations in temperature, and thus in pressure during the residence step may occur within the range of parameters as given, for example if the slurry is transferred.

Prior to the residence step the slurry can be pre-heated, if necessary, to the temperature between 180°C and 350°C in a pre-heating step. This is particularly suitable for example when the process is carried out in a batch process, but may also be applied when the process is performed in a continuous process. Alternatively, the mixed plastic-containing waste and the aqueous phase may be heated separately, before being mixed to form the slurry. If the resulting slurry is already at the temperature between 180°C and 350°C it may not be necessary to heat the slurry any further.

The residence step is followed by cooling down the slurry to at least a temperature where the plastic fraction that was molten during the residence step solidifies. Cooling may be done by any suitable known means such as for example passage through a heat exchanger, transfer to a flash vessel, or transfer to a flash vessel to which an additional aqueous cooling stream is fed. As the plastic fraction that was molten during the residence step solidifies, particles are formed, defined as purified mixed plastic particles. Depending on the further use of the purified mixed plastic particles, they may be separated from the aqueous phase by any suitable known means such as for example by passage through a sieve-centrifugal machine. If desirable, (part of) the purified mixed plastic particles may be subjected to a sink-float treatment in order to separate contamination originating from any of the non-plastic ingredients of the mixed plastic-containing waste. Suitable conditions for carrying out the sink float method can easily be determined by the skilled person, and depend on for example the plastic(s) present in the purified mixed plastic particles. If the purified mixed plastic particles mainly comprise polyolefins, the sink float method is preferably carried out in water.

In the process according to the invention, the formation of purified mixed plastic particles having at least one dimension larger than 20 mm is prevented by creating a well-dispersed mixture. This can be effected for example by agitation. The agitation plays an important role in influencing the particle size. Since at least 80 wt.% of the plastic fraction is in the molten state during the residence step, the plastic will then be substantially present in the slurry in the form of droplets. It was found that the droplet size is influenced by the extent of the agitation: the larger the extent, the smaller the droplet size. Furthermore, it was found that the extent of the agitation may depend on the weight ratio between aqueous phase and mixed plastic-containing waste. If said ratio decreases, the risk increases that the plastic particles or droplets agglomerate strongly, making it more difficult to prevent the formation of purified mixed plastic particles having at least one dimension larger than 20 mm. In order to avoid said agglomeration, the extent of agitation may be increased. Thus, in general, an increase of the extent of agitation will enable the use of a smaller weight ratio between aqueous phase and mixed plastic-containing waste at which the process of the invention can be applied. Since the actual parameters of the agitation, such as revolutions per minute or energy input, will vary significantly as function of several parameters such as for example the viscosity of the aqueous slurry or the design of the agitation apparatus, these actual parameters can best be determined through routine optimisation experiments.

From GS-1,243,603 A a process is known to form thermoplastic beads from polymeric powder. As this process aims at increasing the size of thepolymer particles, there is no helpful teaching available for solving the present problem.

It is the purpose to prevent the formation of purified mixed plastic particles having at least one dimension larger than 20 mm, preferably 10 mm. In order to achieve said purpose, it may not be necessary to perform the agitation continuously during the whole process according to the invention. If, for example, the mixed plastic-containing waste is still solid, which may occur when the slurry has not reached the temperature at which it is kept during the residence step, agitation may not be needed. Also, after the solid purified mixed plastic particles are formed during or after cooling agitation may not be necessary. In general, the necessity of agitation during heating, during the residence step and cooling can be established through routine experimentation using the guidance as given above.

Preferably, the agitation is done by means of stirring or by means of forced turbulence-flow. Forced turbulence flow is defined as turbulence induced in the slurry during transfer; for example, it may be necessary to employ forced turbulence-flow in case the slurry is transferred between vessels, for example during transfer between a vessel where the slurry is heated and a vessel where the slurry is kept during the residence step. The turbulence may be induced through known means such as an increase of the speed of transfer or through the use of static mixers. Preferably, the agitation is done, using the guidance as given above that a higher speed of agitation leads to a smaller droplet size, so that droplet size during the process is between 50 µ and 10 mm, more preferably between 100 µ and 5 mm, so that the resulting purified mixed plastic particles are also within that range.

Since the mixed plastic-containing waste may originate from a variety of sources, it may be advantageous, depending on various factors such as the wt.% of the non-plastic fraction or the shape the mixed plastic-containing waste is supplied in, to perform an operation on the waste prior to entering the process according to the invention. If for example it is desired to reduce the wt.% of paper comprised in the non-plastic fraction, a paper-separation step using known means may be executed. If for example it is desired to reduce the wt.% of non-soluble and/or inert components such as glass or metallic particles, a step to reduce said components may be executed, for example by means of a magnet and/or by means of an air-siffing step wherein said non-soluble and/or inert components are separated from the mixed plastic-containing waste using gravity. It may furthermore be advantageous to perform a shredder step on the mixed plastic-containing waste. It may, alternatively or additionally, be advantageous to pelletize the mixed plastic-containing waste prior to the preparation step, in order to improve handling characteristics through an increase in bulk density and a more controlled size. Alternatively, it may be advantageous to submit the mixed plastic-containing waste to a pre-heating step so that it enters the process according to the invention as a stream that can be pumped, e.g. as a liquid or as a suspension. Said pre-heating step may be especially advantageous if the mixed plastic-containing waste comprises a high percentage, e.g. more than 75 wt.%, preferably more than 90 wt.%, of plastic. As will be understood, the pre-heating step is more effective if the aqueous phase that enters the process according to the invention is also pre-heated to a comparable temperature at least the corresponding autogenous pressure.

The mixed plastic-containing waste can comprise a wide variety of plastics, provided that at least 80 wt.%, preferably at least 90 wt.% of the plastic fraction melts at a temperature between 180°C and 350°C. Examples of plastics that may be comprised in the mixed plastic-containing waste suitable for the process of the invention are polyolefinic plastics (such as polyethylene (PE) and polypropylene (PP)), polystyrene (PS), polyalkylenehalides (such as PVC), polyamides, and polyalkylene terephtalates (such as polyethylene terephtalate (PET)). As the temperature to which the slurry is brought increases, the certainty that at least 80 wt.% of the weight fraction of plastic melts increases too. Preferably, the temperature during the residence step is higher than 200°C, more preferably higher than 250°C. In order to avoid unnecessary degradation of the plastic, the slurry should not be heated to above 350°C, preferably not to above 330°C.

Preferably, the plastic fraction of the mixed plastic-containing waste comprises at least 30 wt.% of stable plastics such as polyolefins or PS, more preferably at least 50 wt.% of polyolefins and/or PS. The indication stable plastic in this context means that the plastic will not significantly degrade during the process of the invention. This has the advantage that the purified mixed plastic particles are suitable for a higher number of applications. For example, most polyolefins will melt but not significantly degrade during the process of the invention, this in contrast to some other plastics such as PVC, polyamides or PET that may have a tendency to degrade or hydrolyse to some extent during the process of the invention. The non-degraded plastics ensure that the purified mixed plastic particles have typical properties that can be expected from plastic or blends of plastic, such as impact resistance or stiffness, so they may be used to produce shaped articles.

During the process of the present invention, many materials of the non-plastic fraction will degrade and/or transfer into the aqueous phase. Preferably, the non-plastic fraction does not comprise more than 20 wt.% of material that does not transfer into the aqueous phase, such as non-soluble inorganic materials like minerals and glass, pigments, sand, and metallic particles, because it is beneficial for the properties of the purified mixed plastic particles if their non-plastic content as expressed in ash content is low. Ash content is defined as the weight percentage of material remaining of a sample after a heat treatment at 850°C during 4 hours. As indicated above, technologies such as those based on magnetism or based on air-sifting/gravity may be employed should it be desirable to reduce the wt.% of material that does not transfer into the aqueous phase to below 20 wt.%. The ash content of the purified mixed plastic particles is preferably below 10 wt.%, more preferably below 6 wt.%, still more preferably below 4 wt.%.

Halogen may be present in the mixed plastic-containing waste that is treated in the process according to the invention. In general, chlorine in mixed plastic-containing waste has three different major sources: inorganic chlorine salts such as kitchen salt or other chlorine-containing salts; PVC and other chlorine-containing plastics; and other organic chlorine-containing compounds. In the process according to the invention, the chlorine from all major sources transfers to a significant extent into the aqueous phase. It was found that removal of chlorine from the mixed plastic-containing waste is more effective if the temperature during the residence step is increased. The removal of chlorine from the mixed plastic-containing Waste is also more effective if the residence time is increased, although the largest chlorine-removing action takes place in the first 20 to 30 minutes of the time the slurry is above 180°C. Preferably, the temperature and residence time are chosen so that the purified mixed particles comprise less than 0.20 wt% of chlorine, more preferably less than 0.15 wt.% of chlorine. Most end-users of the purified mixed plastic particles request that said particles comprise less than 0.20 wt% of chlorine, since the presence of chlorine may cause corrosion. Determination of the wt.% of chlorine in for example the mixed plastic-containing waste, the purified mixed plastic particles or the aqueous phase of the slurry may be done by means of known methods such as neutron activation analysis (NAA).

The liberation of compounds during the process according to the invention, in particular chlorine-containing compounds such as for example hydrochloric acid (HCl) liberated from PVC, may lead to a more acidic environment. It can be beneficial, therefore, to compensate for this by the addition of a base so as to minimise corrosion of the materials of which the reaction space is constructed. In principle, any base is suitable for this purpose; preferably, ammonia, an alkali or alkaline earth metal hydroxide, an alkali or alkaline earth metal phosphate, or a mixture of said bases is used. The addition of basic components may be done at the beginning of the process according to the invention by ensuring that the initial pH of the aqueous phase is higher than 7. The addition of basic components may, alternatively or additionally, be done during any stage of the process according to the invention, for example if more acidic components than expected are released or if for some reason the starting pH of the aqueous phase should be below a certain limit. The addition of a base also can have the effect of accelerating dechlorination reactions. The addition of ammonia, in particular, is believed to have said accelerating effect.

During the residence step, transfer of non-plastic material into the aqueous phase can occur; the residence step also enables dehalogenation. The most suitable residence time depends on both the specific composition of the mixed plastic-containing waste and the desired composition of the purified mixed plastic particles, and may vary within wide limits, in general between 5 minutes and 6 hours. For economical reasons, the residence time is preferably less than 2 hours, more preferably less than 1 hour or even 30 minutes. The person skilled in the art can easily determine the optimal residence time for achieving a certain transfer of non-plastic material into the aqueous phase and/or dechlorination through routine experimentation. For example, the routine experimentation may be done by starting with a short residence time of 5 minutes and then in subsequent experiments increasing the residence time until the transfer of non-plastic material into the aqueous phase and/or dehalogenation are according to the goals set out or do not change any more. During the routine experimentation process, the guidelines may be used that a higher transfer of non-plastic material into the aqueous phase will primarily require a longer residence time and possibly a higher temperature and/or a higher weight ratio between the aqueous phase and the mixed plastic-containing waste and or a larger extent of agitation, and that a stronger dehalogenation effect primarily requires a higher temperature and possibly a longer residence time and/or a higher weight ratio between the aqueous phase and the mixed plastic-containing waste and/or a larger extent of agitation.

The weight ratio between the aqueous phase and the mixed plastic-containing waste during the residence step may vary within wide limits. In general, the amount of aqueous phase is preferably higher with decreasing weight percentage of plastic in the mixed plastic-containing waste, since then the amount of material that transfers into the aqueous phase during the process generally increases. The weight ratio between the aqueous phase and the mixed plastic-containing waste may also be influenced by the characteristics of any subsequent treatment processes of the aqueous phase. For example, if the aqueous phase is send to a wastewater treatment facility, said wastewater treatment facility may impose limits on the amount of allowable waste per volume unit of aqueous phase, which could lead to an adjustment of the weight ratio between the aqueous phase and the mixed plastic-containing waste. Preferably, the weight ratio between the aqueous phase and the mixed plastic-containing waste is at least 0.5:1, more preferably at least 1:1, in particular at least 2:1. In view of the general desire to limit the reactor volume, it is preferred that the weight ratio between the aqueous phase and the mixed plastic-containing waste is below 10:1, more preferably below 4:1.

The pressure during the process of the invention should be at least autogenous, being the combined vapour pressure that is generated by the components of the slurry at the prevailing temperature. This will ensure that volatile components such as water will remain substantially in the liquid phase. Since components such as water do create a significant vapour pressure at temperatures between 180°C and 350°C, the pressure during the process may rise strongly, for example to 8 - 10 MPa or higher at temperatures of about 300°C or to even higher pressures at temperatures between about 300°C and 350°C.

As indicated above, the droplet size of the substantially molten plastic and the particle size of the purified mixed plastic particles are influenced by the extent of the agitation. It was found that said sizes can be further influenced by adding an emulsifier to the slurry. Said emulsifier, leading to a decrease in droplet and particle size, may be added during any phase of the process according to the invention. Surprisingly, it was found that it is not necessary to add an emulsifier, while still influencing droplet size and particle size, if cellulose, typically in the form of fibrillar cellulose-comprising material, is present in the mixed plastic-containing waste. In view of this, it is preferred that cellulose-comprising compounds are also present in the mixed plastic-containing waste. It is preferred that the mixed plastic-containing waste comprises at least 0.5 wt%, more preferably at least 1 wt.% of cellulose. Since a very high amount of cellulose may hinder a smooth operation of the process according to the invention, it is preferred that the amount of cellulose in the mixed plastic-containing waste is 50 wt.% or lower, more preferably 25 wt.% or lower, even more preferably 10 wt.% or lower.

The process according to the invention may be implemented in various ways, such as in the form of a batch process or a (semi)continuous process. Since the process according to the invention lends itself to both batch and (semi)continuous operation, the choice between those primarily depends on external factors such as scale of operation.

The plastic particles that are the result of the process according to the invention are normally separated from the aqueous phase using any suitable known method. Said purified mixed plastic particles may then be used advantageously in a variety of applications. Since the purified mixed plastic particles already have dimensions that make them directly suitable as feedstock, no significant after-treatment such as agglomeration, pelletising or extrusion-granulation is generally needed in order to ensure efficient handling. This is especially economical when operating on industrial scale. Since the purified mixed plastic particles are retrieved by separation from an aqueous phase, it may be beneficial to subject the purified mixed plastic particles to a drying step prior to further use, depending on the needs of the application for which the purified mixed plastic particles are used.

The purified mixed plastic particles may be used to produce shaped articles, using any of the known technologies used for plastic particles, such as compression moulding, injection moulding, extrusion, or rotational moulding. Since the process according to the invention is aimed at minimizing any undesired degradation in the plastic, the mechanical properties of the resulting shaped articles may approach those of articles shaped from the corresponding virgin plastic(s).

The purified mixed plastic particles may also be used as ore-reducing agent in a blast furnace, for example to reduce iron ore during the production of pig iron. The purified mixed plastic particles are transformed in the blast furnace to a gaseous mixture comprising carbon monoxide and hydrogen; said gaseous mixture is typically used to reduce iron ore during the production of pig iron.

The purified mixed plastic particles may furthermore be used as fuel, or as secondary fuel, in furnaces, for example in pulverised coal-, cokes-, or brown coal fired furnaces. Fuel should generally have a high calorific value. The presence of compounds such as cellulose will typically decrease the calorific value since cellulose-base materials such as paper have a relatively low calorific value (typically 15 to 18 MJ/kg), whereas plastics have a much higher calorific value (typically above 40 MJ/kg for virgin PE and PP). It was found that the calorific value of the purified mixed plastic particles according to the invention is typically higher than 30 MJ/kg, or even higher than 35 MJ/kg. This property, combined with the halogen content of, preferably, below 0.20 wt.%, makes the purified mixed plastic particles particularly suitable for use as fuel.

The present invention will be further illustrated by means of the following, non-limiting, Examples.

### Examples and comparative experiment

Examples I-XI and the comparative experiment A were performed in a laboratory-scale 2-liter autoclave made out of Hastelloy 276. The reactor had stirring capacity consisting of a stirrer, with 4 blades having a length of 25% of the diameter of the reactor, which could rotate at speeds up to 1200 rotations per minute (rpm).

### Examples I-V and comparative experiment A

The mixed plastic-containing waste, used as the starting material, was obtained from a German post-consumer recycling system (so-called DSD-material). The mixed plastic-containing waste was analysed and turned out to consist of particles having no dimension larger than 10 mm, to comprise on average 1.24 wt.% of chlorine (determined via NAA) and to comprise 1.5 wt.% of cellulose-comprising fibrillar material (such as paper). The ash content of the DSD material after a heat treatment at 850 °C for 4 hours was 4.05 wt.%.

The reaction was carried out in four steps:
a) a preparation step, in which the DSD-material was brought into contact with an aqueous phase to form a slurry; ammonia was used, the initial pH of the aqueous phase being 10.9;
b) a pre-heating step, in which the slurry was brought to the temperature as indicated in Table 1, the pressure being autogenous corresponding to the used temperature;
c) a residence step, in which the slurry remained, during a residence time as mentioned in Table 1, at the temperature mentioned in Table 1, the pressure being autogenous corresponding to the used temperature, and the slurry being stirred as indicated in Table 1;
d) a cooling step, in which the slurry was cooled to room temperature, and the slurry being stirred as indicated in the Table;

The results of Examples I-V and comparative experiment A are given in Table 1.

**Table 1.**

| **Example / comparative experiment** | **A** | **I** | **II** | **III** | **IV** | **V** |
|---|---|---|---|---|---|---|
| End temperature pre-heating step (°C) | 300 | 300 | 250 | 250 | 300 | 250 |
| Residence time (min) | 120 | 120 | 30 | 120 | 60 | 60 |
| Aqueous: solid (weight ratio) | 2 | 4 | 3 | 3 | 2 | 2 |
| Stirring speed in pre-heating step (rpm) | 1200 | 600 | 1200 | 1200 | 1200 | 1200 |
| Stirring speed in residence step (rpm) | 1200 | 600 | 1200 | 1200 | 1200 | 1200 |
| Stirring speed in cooling step (rpm) | 0 | 1200 | 1200 | 1200 | 1200 | 1200 |
| % chlorine removal* | n.d. | 94 | 80 | 85 | 92 | 81 |
| Purified mixed plastic particles: | | | | | | |
| - particle size, D₁₀ (mm) | n.a. | 0.6 | 0.45 | 0.6 | 0.6 | 0.7 |
| - particle size, D₅₀ (mm) | n.a. | 2.7 | 1.4 | 1.7 | 1.2 | 1.8 |
| - particle size, D₉₀ (mm) | n.a. | 3.9 | 2.7 | 3.5 | 1.8 | 3.8 |
| - chlorine content (wt.%) | n.d. | 0.076 | 0.246 | 0.192 | 0.106 | 0.236 |
| - ash content (wt.%) | n.d. | n.d. | n.d. | n.d. | 3.71 | n.d. |
| - bulk density (kg/m³) | n.d. | 540 | 465 | 520 | 680 | 600 |

| | | | | | | |
|---|---|---|---|---|---|---|
| * Calculated as: chlorine content purified mixed particles / chlorine content DSD material x 100 %; chlorine content was determined by pyrohydrolysis according to DIN 51727, followed by ion chromatography. | | | | | | |
| n.a. = not applicable | | | | | | |
| n.d. = not determined | | | | | | |

The resulting treated material of comparative experiment A became available as essentially one lump, due to insufficient agitation during the cooling step. The purified mixed plastic particles obtained using the process according to the invention are small, as shown in Table 1.

Table 1 shows that the examples performed according to the invention at 300 °C (e.g. Example IV) show a significantly better chlorine removal than those performed at 250 °C (e.g. Example V).

### Example VI

Example VI was performed using the same procedure and starting material as used in the Examples I-V, with the exception that in addition to ammonia, Ca(OH)₂ was used as a base, the weight ratio ammonia : Ca(OH)₂ being 1:4. The temperature during the residence step was 250 °C, the residence time 60 min and the aqueous:solid weight ratio 2. Despite the relatively low end temperature of the pre-heating step, the resulting particles had a chlorine content of only 0,130 wt%, corresponding to 96 % Cl removal, showing that Ca(OH)₂ has a positive effect on the removal of chlorine from the starting material used.

### Examples VII-XI

The starting material, the "mixed plastic-containing pellets", having a diameter between 7.0 and 4.8 mm, were obtained from municipal and industrial waste. The mixed plastic-containing pellets were analysed and turned but to comprise on average 0.48 wt.% of chlorine (determined via NAA) and to comprise 19.4 wt.% of cellulose-comprising fibrillar material (such as paper). The ash content of the mixed plastic-containing pellets after a heat treatment at 850°C for 4 hours was 4.7 wt.%.

Examples VII-XI were performed as Examples I-V, with the following exceptions:
- "mixed plastic-containing pellets" were used instead of DSD material
- in Examples X and XI Ca(OH)₂ was used additionally to ammonia, the ammonia : Ca(OH)₂ ratio being 1:4 and 1:5, respectively;
- the slurry was stirred during the pre-heating, residence and cooling steps as indicated in the Table 2;

The results of Examples VII-XI are given in Table 2.

**Table 2.**

| **Example** | **VII** | **VIII** | **IX** | **X** | **XI** |
|---|---|---|---|---|---|
| End temperature pre-heating step (°C) | 300 | 275 | 275 | 275 | 250 |
| Residence time (min) | 60 | 60 | 120 | 60 | 60 |
| Aqueous: solid (weight ratio) | 2 | 2 | 2 | 2 | 1 |
| % chlorine removal | 92 | 91 | 90 | 94 | 95 |
| Purified mixed plastic particles: | | | | | |
| - particle size D₁₀ (mm) | 0.5 | 0.6 | 0.6 | 0.2 | 0.5 |
| - particle size, D₅₀ (mm) | 1.2 | 1.4 | 1.3 | 0.7 | 1.4 |
| - particle size, D₉₀ (mm) | 2.0 | 1.9 | 1.9 | 1.5 | 2.0 |
| - chlorine content (wt.%) | 0.037 | 0.045 | 0.049 | 0.031 | 0.023 |
| - bulk density (kg/m³) | n.d. | 512 | n.d. | n.d. | n.d. |

| | | | | | |
|---|---|---|---|---|---|
| n.d. = not determined | | | | | |
| *Calculated as: chlorine content purified mixed particles / chlorine content DSD material x 100 %; chlorine content was determined by pyrohydrolysis according to DIN 51727, followed by ion chromatography. | | | | | |

### Example XII. Heating values

Lower and higher heating values were measured according to ISO 1170 and NEN-ISO 1928, respectively, for the mixed plastic containing pellets as used as the starting material in Examples VII-XI, and for the purified mixed plastic particles obtained after applying the process according to the invention. The results are given in Table 3. Typical values for coal are also provided.

**Table 3.**

| | Mixed plastic-containing pellets (starting material) | Purified mixed plastic particles | Coal as used in power plants (typical value) |
|---|---|---|---|
| Lower Heating Value (MJ/kg) | 31.5 | 38.0 | 29.5 |
| Higher Heating Value (MJ/kg) | 33.5 | 40.5 | 30.4 |

Table 3 shows that the heating values increase significantly upon applying the process according to the invention, and are higher than the typical heating values for coal.

### Example XIII-XVI Large scale experiments

Examples XIII-XVI were performed in a AISI 316 Ti steel 10-liter autoclave having an internal height of 50 cm and an internal diameter of 17 cm. The reactor was equipped with three stirrers, each with 4 blades mounted under a corner of 45°, which rotated at 1200 rotations per minute (rpm). The rotating direction of the stirrer was such that the aqueous phase, together with the mixed plastic Pellets, was transported downwardly. Additionally 6 baffles were applied in the reactor wall at a height of 30 cm measured from the reactor bottom and with a width of 2 cm.

The starting material was the same as used in Examples XII-XI.

In Example XIII 32.0 wt% of mixed plastic pellets (2.1 kg), 67.4 wt% (4.3 kg) of demineralised water, 0.6 wt% of ammonia (dosed 160 g of a 25 wt% ammonia solution) were added to the reactor, combined to a slurry and then heated to 275 °C. The residence time at 275 °C was 1 hour. Subsequent cooling was done to room temperature. The slurry was stirred at 1200 rpm during pre-heating, during the residence step and during cooling. The pressure was the autogenous pressure corresponding to the temperature as reached in the pre-heating step.

Examples XIV-XVI were performed as Example XIII, with the exceptions that:
- 1.8 wt% ammonia was applied in Example XIV instead of 0.6 wt% ammonia in Example XIII.
- 1.2 wt% of ammonia and 0.6 wt% of sodium hydroxide were applied in Example XV instead of 0.6 wt% of ammonia in Example XIII.
- 0.6 wt% of trisodium phosphate was applied in Example XVI in addition to the ingredients used in example XIII.

The results of Examples XIII-XVI are given in Table 4.

**Table 4.**

| **Example** | **XIII** | **XIV** | **XV** | **XVI** |
|---|---|---|---|---|
| pH after the cooling step | 5.5 | 7.7 | 8.4 | 5.5 |
| % chlorine removal* | 84 | 91 . | 98 | 96 |

| Purified mixed plastic particles: | | | | |
|---|---|---|---|---|
| - particle size, d < 4.0 mm (wt.%) | 100 | 99.9 | 98.3 | 99.5 |
| - particle size, d < 2.0 mm (wt.%) | 100 | 99.0 | 91.7 | 88.7 |
| - particle size, d,< 1.0 mm (wt.%) | 34.7 | 42.5 | 34.8 | 17.4 |
| - particle size, d < 0.5 mm (wt.%) | 7.9 | 2.9 | 1.9 | 1.5 |
| - chlorine content (wt%) | '0.076 | 0.045 | 0.01 | 0.02 |
| - phosphor content (wt%) | 0.02 | n.d. | n.d. | 0.055 |
| - ash content (wt%) | 3.4 | 2.5 | 2.4 | 2.5 |
| - water content (wt%) | 0.4 | 0.3 | 0.3 | 0.3 |
| - Higher heating value (MJ/kg) | 44.0 | 44.1 | 44.2 | 44.3 |

| | | | | |
|---|---|---|---|---|
| n.d. = not determined | | | | |
| * = Calculated as: chlorine content purified mixed particles / chlorine content DSD material x 100 %; chlorine content was determined by pyrohydrolysis according to DIN 51727, followed by ion chromatography. | | | | |
| Table 4 shows that a higher amount of ammonia results in a better chlorine removal (Example 14). The effect is even larger when NaOH is used in addition to ammonia (Example 15). When trisodium phosphate was used in addition to ammonia, also a very efficient chlorine removal was observed. Trisodium phosphate may be added as a corrosion inhibitor. | | | | |

## Claims

1. Process for the treatment of mixed plastic-containing waste comprising at least 50 wt.% of plastic, wherein the mixed plastic-containing waste and an aqueous phase is kept at a temperature above 180°C during a residence step with a residence time of between 5 minutes and 6 hours, the pressure being at least autogenous, and wherein the mixed plastic-containing waste and the aqueous phase is subsequently cooled in a cooling procedure to at least a temperature at which the plastic fraction that was molten during the residence step solidifies, and purified mixed plastic is formed, **characterised in that** the temperature at which an aqueous slurry comprising the mixed plastic-containing waste and aqueous phase is kept during the residence step is chosen such that at least 80 wt.% of the plastic melts, **in that** purified mixed plastic particles are formed , and **in that** the formation of purified mixed plastic particles having at least one dimension larger than 20 mm is prevented through agitation during at least part of the pre-heating step, the residence step and/or the cooling procedure.

2. Process according to claim 1, wherein the,agitation is done by means of stirring or forced-turbulency-flow.

3. Process according to claim 1 or claim 2, wherein the largest dimension of the purified mixed plastic particles is between 50µ and 5 mm.

4. Process according to any one of claims 1-3, wherein the temperature during the residence step is between 200°C and 330°C.

5. Process according to any one of claims 1-4, wherein the plastic fraction of the mixed plastic-containing waste comprises at least 30 wt.% of polyolefins.

6. Process according to any one of claims 1 - 5, wherein the purified mixed plastic particles comprise less than 0.20 wt% of chlorine.

7. Process according to any one of claims 1-6, wherein the aqueous slurry comprises a base and has a pH of at least 7.

8. Process according to claim 7, wherein the base is chosen from the group consisting of ammonia, an alkali or alkaline earth metal hydroxide, and a mixture of two or more of the above mentioned bases.

9. Process according to any one of claims 1-8, wherein the weight ratio between the aqueous phase and the mixed plastic-containing waste during the residence step is between 0.5:1 and 10:1.

10. Process according to any one of claims 1 - 9, wherein an emulsifier is added to the slurry.

11. Process according to any one of claims 1-9, wherein the mixed plastic-containing waste comprises between 0.5 wt.% and 25 wt.% of cellulose.

12. Process according to any one of claims 1-11, wherein after the residence step or the cooling procedure the slurry is subjected to a sink-float treatment.

## Patentansprüche

1. Verfahren zur Behandlung von Kunststoffgemisch-enthaltendem Abfall, umfassend mindestens 50 Gew.-% an Kunststoff, wobei der Kunststoffgemischenthaltende Abfall und eine wäßrige Phase bei einer Temperatur von oberhalb 180°C während eines Verweilschritts mit einer Verweildauer von zwischen 5 Minuten und 6 Stunden gehalten wird, wobei der Druck mindestens autogen ist, und wobei der Kunstoffgemisch-enthaltende Abfall und die wäßrige Phase nachfolgend in einem Kühlvorgang zu mindestens einer Temperatur abgekühlt werden, bei welcher sich die Kunststofffraktion, die während des Verweilsschritts geschmolzen war, verfestigt, und ein gereinigtes Kunststoffgemisch gebildet wird, **dadurch gekennzeichnet, daß** die Temperatur, bei welcher eine wäßrige Aufschlämmung, umfassend den Kunststoffgemisch-enthaltenden Abfall und die wäßrige Phase, während des Verweilschritts gehalten wird, derart ausgewählt wird, daß mindestens 80 Gew.-% des Kunststoffs schmilzt, daß gereinigte Kunststoffgemisch-Teilchen gebildet werden und darin, daß die Bildung von gereinigten Kunststoffgemisch-Teilchen mit mindestens einer Dimension von größer als 20 mm durch Umwälzung während mindestens eines Teils des Vorerwärmungsschritts, des Verweilschritts und/oder des Kühlvorgangs verhindert wird.

2. Verfahren gemäß Anspruch 1, wobei die Umwälzung mittels Rühren oder Zwangsturbulenzfluß durchgeführt wird.

3. Verfahren gemäß Anspruch 1 oder Anspruch 2, wobei die größte Dimension der gereinigten Kunststoffgemisch-Teilchen zwischen 50 µ und 5 mm beträgt.

4. Verfahren gemäß einem der Ansprüche 1-3, wobei die Temperatur während des Verweilschritts zwischen 200°C und 330°C beträgt.

5. Verfahren gemäß einem der Ansprüche 1-4, wobei die Kunststofffraktion des Kunststoffgemisch-enthaltenden Abfalls mindestens 30 Gew.-% Polyolefine umfaßt.

6. Verfahren gemäß einem der Ansprüche 1-5, wobei die gereinigten Kunststoffgemisch-Teilchen weniger als 0,20 Gew.-% Chlor umfassen.

7. Verfahren gemäß einem der Ansprüche 1-6, wobei die wäßrige Aufschlämmung eine Base umfaßt und einen pH von mindestens 7 aufweist.

8. Verfahren gemäß Anspruch 7, wobei die Base aus der Gruppe, bestehend aus Ammoniak, einem Alkali- oder Erdalkalimetallhydroxid und einem Gemisch von zwei oder mehreren der vorstehend genannten Basen, ausgewählt ist.

9. Verfahren gemäß einem der Ansprüche 1-8, wobei das Gewichtsverhältnis zwischen der wäßrigen Phase und dem Kunststoffgemisch-enthaltenden Abfall während des Verweilschritts zwischen 0,5:1 und 10:1 beträgt.

10. Verfahren gemäß einem der Ansprüche 1-9, wobei ein Emulgator zu der Aufschlämmung gegeben wird.

11. Verfahren gemäß einem der Ansprüche 1-9, wobei der Kunststoffgemischenthaltende Abfall zwischen 0,5 Gew.-% und 25 Gew.-% Cellulose umfaßt.

12. Verfahren gemäß einem der Ansprüche 1-11, wobei nach dem Verweilschritt oder dem Abkühlvorgang die Aufschlämmung einer Schwimm-Sink-Behandlung unterworfen wird.

## Revendications

1. Procédé pour le traitement de déchets mélangés contenant du plastique comprenant au moins 50 % en poids de matières plastiques, dans lequel les déchets mélangés contenant du plastique et une phase aqueuse sont maintenus à une température supérieure à 180 °C pendant une étape de traitement avec un temps de séjour entre 5 minutes et 6 heures, la pression étant au moins autogène, et dans lequel les déchets mélangés contenant du plastique et la phase aqueuse sont ensuite refroidis dans une procédure de refroidissement à au moins une température à laquelle la fraction de plastique qui était fondue pendant l'étape de traitement, se solidifie, et on forme un plastique mélangé purifié, **caractérisé en ce que** la température à laquelle la suspension aqueuse comprenant les déchets mélangés contenant le plastique et la phase aqueuse sont maintenues pendant l'étape de traitement est choisie en sorte qu'au moins 80 % en poids du plastique fondent, **en ce que** des particules de plastique mélangé purifié sont formées, et **en ce que** la formation de particules de plastique mélangé purifié ayant au moins une dimension supérieure à 20 mm est évitée par agitation pendant au moins une partie de l'étape de préchauffage, l'étape de traitement et/ou la procédure de refroidissement.

2. Procédé selon la revendication 1, dans lequel l'agitation est faite au moyen d'une agitation ou d'un écoulement à turbulence forcée.

3. Procédé selon la revendication 1 ou la revendication 2, dans lequel la plus grande dimension des particules de plastique mélangé purifié est entre 50 µm et 5 mm.

4. Procédé selon l'une quelconque des revendications 1 à 3, dans lequel la température pendant l'étape de traitement est entre 200 °C et 330 °C.

5. Procédé selon l'une quelconque des revendications 1 à 4, dans lequel la fraction de plastique des déchets mélangés contenant du plastique comprend au moins 30 % en poids de polyoléfines.

6. Procédé selon l'une quelconque des revendications 1 à 5, dans lequel les particules de plastique mélangé purifié comprennent moins de 0,20 % en poids de chlore.

7. Procédé selon l'une quelconque des revendications 1 à 6, dans lequel la suspension aqueuse comprend une base et a un pH d'au moins 7.

8. Procédé selon la revendication 7, dans lequel on choisit la base dans le groupe constitué de l'ammoniac, un hydroxyde de métal alcalin ou alcalino-terreux, et un mélange de deux ou plus des bases mentionnées ci-dessus.

9. Procédé selon l'une quelconque des revendications 1 à 8, dans lequel le rapport en poids entre la phase aqueuse et les déchets mélangés contenant du plastique pendant l'étape de traitement est entre 0,5:1 et 10:1.

10. Procédé selon l'une quelconque des revendications 1 à 9, dans lequel on ajoute à la suspension un émulsifiant.

11. Procédé selon l'une quelconque des revendications 1 à 9, dans lequel les déchets mélangés contenant du plastique comprennent entre 0,5 % en poids et 25 % en poids de cellulose.

12. Procédé selon l'une quelconque des revendications 1 à 11, dans lequel après l'étape de traitement ou la procédure de refroidissement, on soumet la suspension à un traitement de flottation.
